(19) Europäisches Patentamt
European Patent Office
Office européen des brevets

(11) EP 0 965 614 B1

(12) # EUROPÄISCHE PATENTSCHRIFT

(45) Veröffentlichungstag und Bekanntmachung des Hinweises auf die Patenterteilung:
**15.03.2006 Patentblatt 2006/11**

(21) Anmeldenummer: **99111487.7**

(22) Anmeldetag: **14.06.1999**

(51) Int Cl.:
***C08L 45/00*** *(2006.01)*
*C08L 45/00* *(2006.01)*
*C08L 45/00* *(2006.01)*
*C08L 45/00* *(2006.01)*
*C08L 53/02* *(2006.01)*
***C08L 23/08*** *(2006.01)*
*C08L 51/04* *(2006.01)*
*C08L 53/00* *(2006.01)*
*C08L 51/04* *(2006.01)*

(54) **Schlagzähe Cycloolefin-Copolymer-Legierung**

Impact resistant cycloolefin-copolymer blend

Alliage de copolymères cyclooléfiniques résistante aux chocs

(84) Benannte Vertragsstaaten:
**DE FR GB IT**

(30) Priorität: **16.06.1998 DE 19826425**
**19.11.1998 DE 19853349**

(43) Veröffentlichungstag der Anmeldung:
**22.12.1999 Patentblatt 1999/51**

(73) Patentinhaber: **Ticona GmbH**
**65451 Kelsterbach (DE)**

(72) Erfinder:
- **Jacobs, Alexandra, Dr.**
**65527 Niedernhausen (DE)**
- **Berger, Klaus Dr.**
**65843 Sulzbach (DE)**
- **Hatke, Wilfried, Dr.**
**65719 Hofheim (DE)**

(74) Vertreter: **Ackermann, Joachim**
**Postfach 11 13 26**
**60048 Frankfurt am Main (DE)**

(56) Entgegenhaltungen:
**EP-A- 0 661 345**
**EP-A- 0 761 752**
**WO-A-97/46617**

- **DATABASE WPI Section Ch, Week 9825 Derwent Publications Ltd., London, GB; Class A17, AN 98-280460 XP002116556 & JP 10 095881 A (MITSUI PETROCHEM IND CO LTD), 14. April 1998 (1998-04-14)**
- **PATENT ABSTRACTS OF JAPAN vol. 095, no. 009, 31. Oktober 1995 (1995-10-31) & JP 07 166009 A (TOPPAN PRINTING CO LTD), 27. Juni 1995 (1995-06-27)**
- **PATENT ABSTRACTS OF JAPAN vol. 095, no. 009, 31. Oktober 1995 (1995-10-31) & JP 07 166008 A (TOPPAN PRINTING CO LTD), 27. Juni 1995 (1995-06-27)**
- **PATENT ABSTRACTS OF JAPAN vol. 018, no. 520 (C-1255), 30. September 1994 (1994-09-30) & JP 06 179781 A (MITSUI PETROCHEM IND LTD), 28. Juni 1994 (1994-06-28)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 965 614 B1

## Beschreibung

Die vorliegende Erfindung betrifft Polymer-Legierungen aus Cycloolefincopolymeren (COC) und Schlagzähmodifikatoren. Die erfindungsgemäßen Polymer-Legierungen sind schlagzäh und zeichnen sich durch eine hohe Biegefestigkeit, Reißdehnung und verbesserte Verarbeitbarkeit aus.

Schlagzähe Polymere sind hinlänglich bekannt und für eine Vielzahl von Anwendungen geeignet (C.B. Bucknall, Toughened Plastics, Applied Science Publishers, London 1977; A.E. Platt, Rubber Modification of Plastics, Advances in Polymer Science, Seite 437).

Weiterhin ist bekannt, daß durch Legieren die Schlagzähigkeit und die Reißdehnung von Polymeren verbessert werden kann. So kann die Schlagzähigkeit von spröden Polymeren verbessert werden durch Legieren mit Polymersystemen, die ganz oder zum Teil aus Kautschuken mit niedrigen Glastemperaturen aufgebaut sind, durch Legieren mit Kern-Schale-Partikeln oder durch Kombination dieser Modifikatoren. Die Morphologie und damit auch die mechanischen Eigenschaften hängen dabei stark von den Verarbeitungsbedingungen (G.H. Michler, Kunststoff-Mikromechanik, Hanser, München 1992, Seite 281ff; A.E. Platt, Rubber Modification of Plastics, Advances in Polymer Science, Seite 437; P.A. Lovell et al.. Polymer, 34 (1993) Seite 61).

Ebenfalls bekannt sind Polymer-Legierungen von Cycloolefincopolymeren. In EP-A-0 647 677 und EP-A-0 647 676 sind Legierungen mit Kern-Schale-Partikeln beschrieben. In EP-A-0 661 345 wurden Kern-Schale-Partikel mit Copolymeren kombiniert, die teilweise aus Kautschuken mit niedrigen Glastemperaturen aufgebaut sind.

Die durch Legierung der beschriebenen Cycloolefincopolymere erhaltenen Materialien weisen eine für technische Anwendungszwecke nicht ausreichend hohe Schlagzähigkeit auf.
Die Aufgabe der vorliegenden Erfindung liegt darin, ein Polymer mit einer für technische Anwendungszwecke ausreichend hohen Schlagzähigkeit bereitzustellen.

Es wurde gefunden, daß eine erfindungsgemäße Polymer-Legierung, die eines oder mehrere Cycloolefincopolymere enthält, die einen Plateaumodul G'p der folgenden Gleichung:

$$\log G'p \geq -0{,}0035 \cdot Tg + 6$$

besitzen und

a) einen oder mehrere Typen von Kern-Schale-Partikeln oder
b) eines oder mehrere Copolymere, die teilweise aus Kautschuken mit niedrigen Glastemperaturen aufgebaut sind, oder
c) eine Kombination von einem oder mehreren Typen von Kern-Schale-Partikeln und einem oder mehreren Copolymeren, die teilweise aus Kautschuken mit niedrigen Glastemperaturen aufgebaut sind,

eine für technische Anwendungszwecke ausreichend hohe Schlagzähigkeit aufweist.

Die erfindungsgemäße Polymer-Legierung ist dadurch gekennzeichnet, dass die Polymerlegierung mindestens ein Cycloolefincopolymer enthält, das hergestellt wird durch Polymerisation von 0,1 bis 99,9 Gew.-%, bezogen auf die Gesamtmenge der Monomeren, mindestens eines polycyclischen Olefins der Formel I, II, II', III, IV oder V

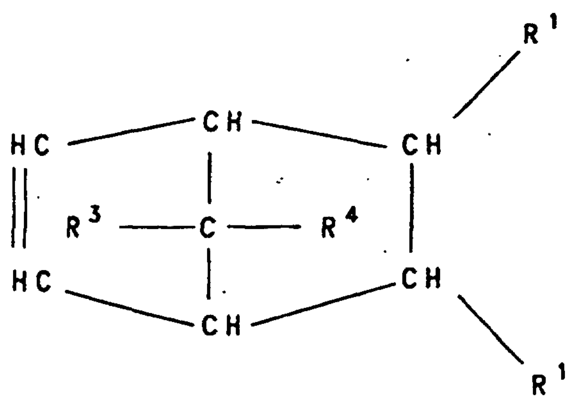

(I),

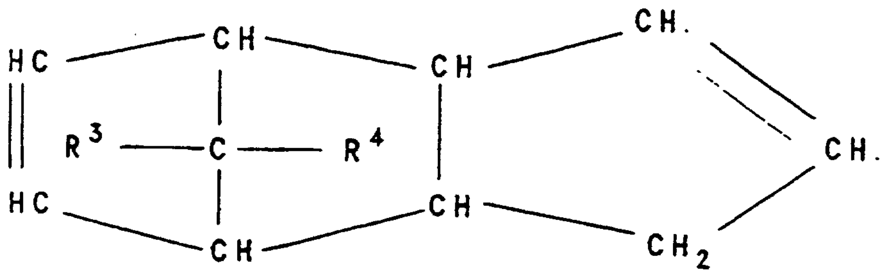

(II),

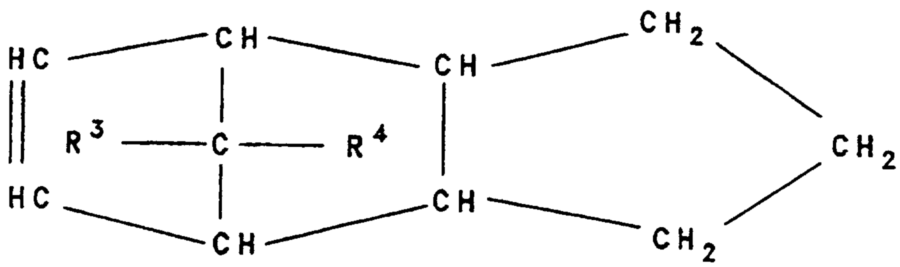

(II),

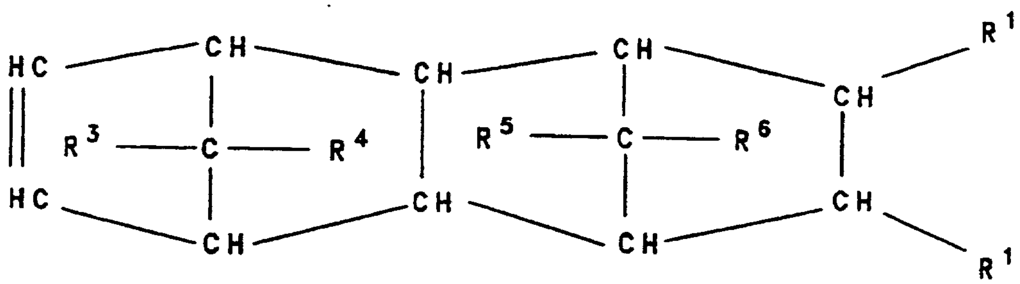

(III),

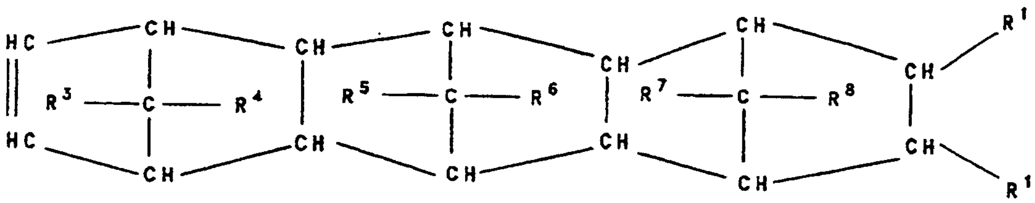

(IV),

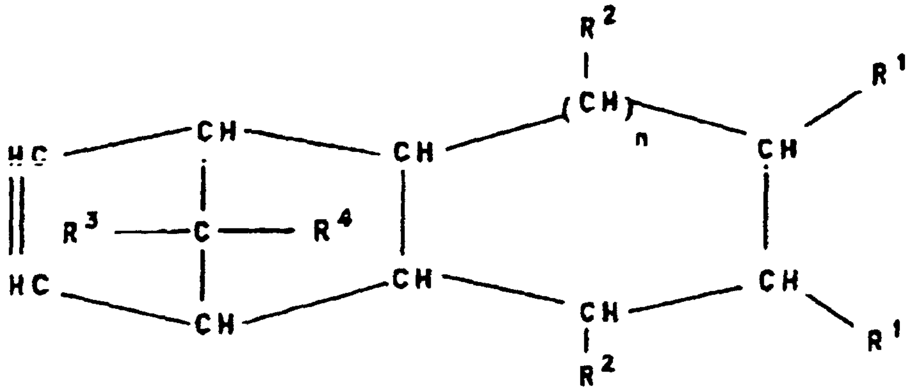

(V).

worin $R^1$, $R^2$, $R^3$, $R^4$, $R^5$, $R^6$, $R^7$ und $R^8$ gleich oder verschieden sind und ein Wasserstoffatom oder einen Kohlenwasserstoffrest bedeuten, wobei gleiche Reste in den verschiedenen Formeln eine unterschiedliche Bedeutung haben können,
und 0.1 bis 99,9 Gew.-%, bezogen auf die Gesamtmenge der Monomeren, mindestens eines acyclischen 1-Olefins der Formel VII

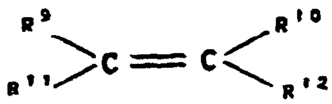

(VII).

worin $R^9$, $R^{10}$, $R^{11}$ und $R^{12}$ gleich oder verscheiden sind und ein Wasserstoffatorn oder einen Kohlenwasserstoffrest, bevorzugt einen $C_6$-$C_{10}$-Arylrest oder einen $C_1$-$C_8$-Alkylrest bedeuten.

Bevorzugt sind Cycloolefine der Formeln I oder III, worin $R^1$, $R^2$, $R^3$, $R^4$, $R^5$, $R^6$, $R^7$ und $R^8$ gleich oder verscheiden sind und ein Wasserstoffatom oder einen Kohlenwasserstoffrest, insbesondere einen ($C_6$-$C_{10}$)-Arylrest oder einen ($C_1$-$C_8$)-Alkylrest bedeuten, wobei gleiche Reste In den verschiedenen Formeln eine unterschiedliche Bedeutung haben können.

Bevorzugt ist weiterhin ein acyclisches Olefin der Formel VII, worin $R^9$, $R^{10}$, $R^{11}$ und $R^{12}$ gleich oder verscheiden sind und ein Wasserstoffatom oder einen Kohlenwasserstoffrest, bevorzugt eine $C_6$-$C_{10}$-Arylrest oder einen $C_1$-$C_8$-Alkylrest bedeuten, wie Ethylen, Propylen.

Insbesondere werden Copolymere von polycyclischen Olefinen, vorzugsweise der Formeln I und III, mit Ethylen hergestellt.

Besonders bevorzugte polycyclische Olefine sind Norbornen und Tetracyclododecen, wobei diese durch $C_1$-$C_6$-Alkyl substituiert sein können. Sie werden vorzugsweise mit Ethylen copolymerisiert. Ganz besonders bevorzugt sind Ethylen/Norbornen-Copolymere und Ethylen/Tetracyclododecen-Copolymere.

Die erfindungsgemäße Polymer-Legierung ist dadurch gekennzeichnet, daß das oder die enthaltenen Cycloolefincopolymere nach dem nachstehend beschriebenen Verfahren hergestellt werden. Das Verfahren zur Herstellung der in der erfindungsgemäßen Polymer-Legierung enthaltenen Cycloolefincopolymere ist in DE-A-19652340 ausführlich beschrieben. Auf DE-A-19652340 wird hiermit ausdrücklich Bezug genommen.

Das erfindungsgemäße Verfahren zur Herstellung eines Cycloolefincopolymers umfaßt die Polymerisation von 0,1 bis 99,9 Gew.-%, bezogen auf die Gesamtmenge der Monomeren, mindestens eines polycyclischen Olefins und 0,1 bis 99,9 Gew.-%, bezogen auf die Gesamtmenge der Monomeren, mindestens eines acyclischen 1-Olefins, in Gegenwart eines Katalysatorssystems. Das zur Herstellung des in der erfindungsgemäßen Polymer-Legierung enthaltenen Cycloolefincopolymers zu verwendende Katalysatorsystem enthält mindestens eine Übergangsmetallverbindung. Bevorzugt werden als Übergangsmetallverindung ein oder mehrere Metallocene eingesetzt.

Die Polymerisation wird im flüssigen Cycloolefin selbst oder in Cycloolefin-Lösung durchgeführt, wobei zweckmäßigerweise der Druck oberhalb 1 bar liegt.

Das zur Herstellung des in der erfindungsgemäßen Polymer-Legierung enthaltenen Cycloolefincopolymers zu verwendende Katalysatorsystem kann außerdem einen oder mehrere Cokatalysatoren enthalten.

Das zur Herstellung des in der erfindungsgemäßen Polymer-Legierung enthaltenen Cycloolefincopolymers zu verwendende Katalysatorsystem ist ein hochaktiver Katalysator für die Olefinpolymerisation. Bevorzugt werden ein

Metallocen und ein Cokatalysator eingesetzt. Es können auch Mischungen von zwei oder mehr Metallocenen verwendet werden, insbesondere zur Herstellung von Reaktorblends oder von Polyolefinen mit breiter oder multimodaler Molmassenverteilung.

Das Verfahren zur Herstellung des in der erfindungsgemäßen Polymer-Legierung enthaltenen Cycloolefincopolymers sowie das für dieses Verfahren zu verwendende Katalysatorsystem sind in DE-A-19652340 ausführlich beschrieben. Hierauf wird ausdrücklich Bezug genommen.

Das zur Herstellung des in der erfindungsgemäßen Polymer-Legierung enthaltenen Cycloolefincopolymers zu verwendende Katalysatorsystem enthält als Cokatalysator bevorzugt ein Aluminoxan.

Beispiele für die erfindungsgemäß zu verwendenden Metallocene sind:

Isopropylen(1-indenyl)(3-Methylcyclopentadienyl)zirkondichlorid,
Diphenylmethylen(1-indenyl)(3-methylcyclopentadienyl)zirkondichlorid,
Methylphenylmethylen(1-indenyl)(3-methylcyclopentadienyl)zirkondichlorid,
Isopropylen(1-indenyl)(3-isopropylcyclopentadienyl)zirkondichlorid,
Diphenylmethylen(1-indenyl)(3-isopropylcyclopentadienyl)zirkondichlorid,
Methylphenylmethylen(1-indenyl)(3-isopropylcyclopentadienyl)zirkondichlorid,
Isopropylen(1-indenyl)(3-t-butylcyclopentadienyl)zirkondichlorid,
Diphenylmethylen(1-indenyl)(3-t-butylcydopentadienyl)zirkondichlorid
Methylphenylmethylen(1-indenyl)(3-t-butylcyclopentadienyl)zirkondichlorid
Isopropylen(1-indenyl)(3-trimethylsilylcyclopentadienyl)zirkondichlorid
Diphenylmethylen(1-indenyl)(3-trimethylsilylcyclopentadienyl)zirkondichlorid
Methylphenylmethylen(1-indenyl)(3-trimethylsilylcyclopentadienyl)zirkondichlorid
lsapropylen(4,5,6,7-tetrahydro-1-indenyl)(3-trimethylsilylcyclopentadienyl) zirkondichlorid
Diphenylmethylen(1-indenyl)(3-trimethylsilylcyclopentadienyl)zirkondichlorid,
Methylphenylmethylen(1-indenyl)(3-trimethysilylpentadienyl)zirkondichlorid,
Isopropylen(4,5,6,7-tetrahydro-1-indenyl)(3-trimethylsilylcyclopentadienyl)zirkondichlorid,
lsopropylen(1-indenyl)(3,4-dimethylcyclopentadienyl)zirkondichlorid
Diphenylmethyten(4,5,6,7-tetrahydro-1-indenyl)(3-trimethyisilyicyclopentadienyl)zirkondichlorid
Methylphenylmethylen(4,5,6,7-tetrahydro-1-indenyl)(3-trimethylsilylcyclopentadienyl)zirkondichlorid
Isopropylen(1-indenyl)(3,4-di-trimethylsilylcyclopentadienyl)zirkondichlorid
Diphenylmethylen(1-indenyl)(3,4-di-trimethylsilylcydopentadienyl)zirkondichlorid
Methylphenylmethylen(1-indenyl)(3,4-di-trimethylsilylcyclopentadienyl)zirkondichlorid
Isopropylen(1-indenyl)(2,3-di-trimethylsilylcyclopentadienyl)zirkondichlorid
Diphenylmethylen(1-indenyl)(2,3-di-trimethylsiiylcyclopentadienyl)zirkondichlorid
Methylphenylmethylen(1-indenyl)(2,3-di-trimethylsilylcyclopentadienyl) zirkondichlorid
Isopropylen(1-indenyl)(3,4dimethyl(cyclopentadienyl)zirkondichlorid
Diphenylmethylen(1-indenyl)(3,4-dimethylcyclopentadienyl)zirkondichlorid
Methylphenylmethylen(1-indenyl)(3,4-dimethylcyclopentadienyl)zirkondichlorid
Diphenylmethylen(1-indenyl)(3,4-diethylcyclopentadienyl)zirkondichlorid,
Methylphenylmethylen(1-indenyl)(3,4-diethylcyclopentadienyl)zirkondichlorid,
Isopropylen(1-indenyl)(3,4-diisopropylcyclopentadienyl)zirkondichlorid,
Diphenylmethylen(1-indenyl)(3,4-diisopropylcyclopentadienyl)zirkondichlorid,
Methylphenylmethylen(1-indenyl)(3,4-diisopropylcyclopentadienyl)zirkondichlorid,
Isopropylen(1-indenyl)(3,4-diethylcydopentadienyl)zirkondichlorid
Isopropylen(1-indenyl)(3,4-di-t-butylcycopentadienyl)zirkondichlorid
Diphenylmethylen(1-indenyl)(3,4-di-t-butylcyclopentadienyl)zirkondichlorid
Methylphenylmethylen(1-indenyl)(3,4-di-t-butylcyclopentadienyl)zirkondichlorid
Isopropylen(1-indenyl)(2,3-dimethylcyclopentadienyl)zirkondichlorid
Diphenylmethylen(1-indenyl)(2,3-dimethylcyclopentadienyl)zirkondichlorid
Methylphenylmethylen(1-indenyl)(2,3-dimethylcyclopentadienyl)zirkondichlorid
Isopropylen(1-indenyl)(2,3-diethylcyclopentadienyl)zirkondichlorid
Diphenylmethylen(1-indenyl)(2,3-diethylcyclopentadienyl)zirkondichlorid
Methylphenylmethylen(1-indenyl)(2,3-diethylcyclopentadienyl)zirkondichlorid
Isopropylen(1-indenyl)(2,3-diisopropylcyclopentadienyl)zirkondichlorid
Diphenylmethylen(1-indenyl)(2,3-diisopropylcyclopentadienyl)zirkondichlorid
Methylphenylmethylen(1-indenyl)(2,3-diisopropylcyclopentadienyl)zirkondichlorid.
Isopropylen(1-indenyl)(2,3-di-t-butyicycopentadienyl)zirkondichlorid
Diphenylmethylen(1-indenyl)(2,3-di-t-butylcyclopentadienyl)zirkondichlorid

Methylphenylmethylen(1-indenyl)(2,3-di-t-butylcyclopentadienyl)zirkondichlorid
Isopropylen(1-indenyl)(tetramethylcyclopentadienyl)zirkondichlorid
Diphenylmethylen(1-indenyl)(tetramethylcyclopentadienyl)zirkondichlorid
Methylphenylmethylen(1-indenyl)(tetramethylcyclopentadienyl)zirkondichlorid
Isopropylen(4,5,6,7-tetrahydro-1-indenyl)(3-methylcyclopentadienyl)zirkondichlorid
Diphenylmethylen(4,5,6,7-tetrahydro-1-indenyl)(3-methylcyclopentadienyl)zirkondichlorid
Methylphenylmethylen(4,5,6,7-tetrahydro-1-indenyl)(3-methylcyclopentadienyl)zirkondichlorid,
Isopropylen(4,5,6,7-tetrahydro-1-indenyl)(3-ethylcyclopentadienyl)zirkondichlorid
Diphenylmethylen(4,5,6,7-tetrahydro-1-indenyl)(3-ethylcyclopentadienyl) zirkondichlorid
Methylphenylmethylen(4,5,6,7-tetrahydro-1-indenyl)(3-ethylcyclopentadienyl)zirkondichlorid
Isopropyl(cyclopentadienyl)zirkondichlorid
Isopropylen(4,5,6,7-tetrahydro-1-indenyl)(3-isopropylcyclopentadienyl)zirkondichlorid,
Diphenylmethylen(4,5,6,7-tetrahydro-1-indenyl)(3-isopropylcyclopentadienyl)zirkondichlorid,
Methylphenylmethylen(4,5,6,7-tetrahydro-1-indenyl)(3-isopropylcyclopentadienyl)zirkondichforid
Isopropylen(4,5,6,7-tetrahydro-1-indenyl)(3-t-butylcyclopentadienyl)zirkondichlorid,
Diphenylmethylen(4,5,6,7-tetrahydro-1-indenyl)(3-t-butylcyclopentadienyl)zirkondichlorid
Methylphenylmethylen(4,5,6,7-tetrahydro-1-indenyl)(3-t-butylcyclopentadienyl)zirkondichlorid
Isopropylen(4,5,6,7-tetrahydro-1-indenyl)(3,4-dimethylcyclopentadienyl)zirkondichlorid
Diphenylmethylen(4,5,6,7-tetrahydro-1-indenyl)(3,4dimethylcyclopentadienyl)zirkondichlorid,
Methylphenylmethylen(4,5,6,7-tetrahydro-1-indenyl)(3,4dimethylcyclopentadienyl)zirkon-dichlorid,
Isopropylen(4,5,6,7-tetrahydro-1-indenyl)(3,4diethylcyclopentadienyl)zirkondichlorid
Diphenylmethylen(4,5,6,7-tetrahydro-1-indenyl)(3,4-diethyicyclopentadienyl)zirkondichlorid Methylphenylmethylen (4,5,6,7-tetrahydro-1-indenyl)(3,4diethylcyclopenta-dienyl)zirkondichlorid
Isopropylen(4,5,6,7-tetrahydro-1-indenyl)(3,4diisopropylcyclopentadienyl)zirkondichlorid
Diphenylmethylen(4,5,6,7-tetrahydro-1-indenyl)(3,4diisopropylcyclopentadienyl)zirkondichlorid
Methylphenylmethylen(4,5,6,7-tetrahydro-1-indenyl)(3,4diisopropylcyclopentadienyl)zirkondichlorid
Isopropylen(4,5,6,7-tetrahydro-1-indenyl)(3,4-dibutylcycopentadienyl)zirkondichlorid
Diphenylmethylen(4,5,6,7-tetrahydro-1-indenyl)(3,4-di-t-butylcyclopentadienyl)zirkondichlorid
Methylphenylmethylen(4,5,6,7-tetrahydro-1-indenyl)(3,4-di-t-butylycyclopentadienyl)zirkondichlorid,
Isopropylen(4,5,6,7-tetrahydro-1-indenyl)(2,3dimethylcyclopentadienyl)zirkondichlorid
Diphenylmethylen(4,5,6,7-tetrahydro-1-indenyl)(2,3-dimethylcyclopentadienyl)zirkondichlorid
Methylphenylmethylen(4,5,6,7-tetrahydro-1-indenyl)(2,3-dimethylcyclopentadienyl)zirkondichlorid
Isopropylen(4,5,6,7-tetrahydro-1-indenyl)(2,3-methylcyclopentadienyl)zirkondichlorid
Diphenylmethylen(4,5,6,7-tetrahydro-1-indenyl)(2,3diethylcydopentadienyl)zirkondichlorid
Methylphenylmethylen(4,5,6,7-tetrahydro-1-indenyl)(2,3-diethylcyclopentadienyl)zirkondichlorid
Isopropylen(4,5,6,7-tetrahydro-1-indenyl)(2,3-diisopropylcyclopentadienyl)zirkondichlorid
Diphenylmethylen(4,5,6,7-tetrahydro-1-indenyl)(2,3diisopropylcyclopentadienyl)zirkondichlorid
Methylphenylmethylen(4,5,6,7-tetrahydro-1-indenyl)(2,3diisopropylcyclopentadienyl)zirkondichlorid isopropylen (4,5,6,7-tetrahydro-1-indenyl)(2,3-di-t-butylcycopentadienyl)zirkondichlorid
Diphenylmethylen(4,5,6,7-tetrahydro-1-indenyl)(2,3-di-t-butylcyclopentadienyl)zirkondichlorid
Methylphenylmethylen(4,5,6,7-tetrahydro-1-indenyl)(2,3-di-t-butylcyclopentadienyl)zirkondichlorid
lsopropylen(4,5,6,7-tetrahydro-1-indenyl)(tetramethylcyclopentadienyl) zirkondichlorid Diphenylmethylen (4,5,6,7-tetrahydro-1-indenyl)(tetramethylcyclopentadienyl)zirkondichlorid Methylphenylmethylen(4,5,6,7-tetrahydro-1-indenyl)(tetramethylcyclopentadienyl)zirkondichlorid

Besonders bevorzugt sind:

Isopropylen(1-indenyl)(3-isopropylcyclopentadienyl)zirkondichlorid
Diphenylmethylen(1-indenyl)(3-isopropylcyclopentadienyl)zirkondichlorid
Methylphenylmethylen(1-indenyl)(3-isopropylcyclopentadienyl)zirkondichlorid
Isopropylen(1-indenyl)(3-t-butylcyclopentadienyl)zirkondichlorid
Diphenylmethylen(1-indenyl)(3-t-butylcyclopentadienyl)zirkondichlorid
Methylphenylmethylen(1-indenyl)(3-t-butylcyclopentadienyl)zirkondichlorid
Isopropylen(4,5,6,7-tetrahydro-1-indenyl)(3-isopropylcyclopentadienyl)zirkondichlorid
Diphenylmethylen(4, 5,6,7-tetrahydro-1-indenyl)(3-isopropylcyclopentadienyl)zirkondichlorid
Methylphenylmethylen(4,5,6,7-tetrahydro-1-indenyl)(3-isopropylcyclopentadienyl)zirkondichlorid
Isopropylen(1-indenyl)(3-trimethylsilylcyclopentadienyl)zirkondichlorid
Diphenylmethylen(1-indenyl)(3-trimethylsilylcyclopentadienyl)zirkondichlorid

Methylphenylmethylen(1-indenyl)(3-trimethyisilylcyclopentadienyl)zirkondichlorid
Isopropylen(4,5,6,7-tetrahydro-1-indenyl)(3-t-butylcyclopentadienyl)zirkondichlorid
Diphenylmethylen(4,5,6,7-tetrahydro-1-indenyl)(3-t-butylcyclopentadienyl)zirkondichlorid
Methylphenylmethylen(4,5,6,7-tetrahydro-1-indenyl)(3-t-butylcyclopentadienyl)zirkondichlorid
Isopropylen(4,5,6,7-tetrahydro-1-indenyl)(3-trimethylsilylcyclopentadienyl)zirkondichlorid
Diphenylmethylen(4,5,6,7-tetrahydro-1-indenyl)(3-trimethylsilylcyclopentadienyl)zirkondichlorid
Methylphenylmethylen(4,5,6,7-tetrahydro-1-indenyl)(3-trimethylsilylcyclopentadienyl)zirkondichlorid

Eine weitere mögliche Ausgestaltung des erfindungsgemäßen Verfahrens besteht darin, daß man an Stelle oder neben eines Aluminoxans eine salzartige Verbindung der Formel $RxNH_{4-x}BR'_4$ oder der Formel $R_3PHBR'_4$ als Cokatalysator verwendet. Dabei sind x = 1 , 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (EP-A-0 277 004).

Falls dem Reaktionsgemisch Lösemittel zugesetzt wird, dann handelt es sich um gebräuchliche inerte Lösemittel wie aliphatische oder cycloaliphatische Kohlenwasserstoffe, Benzin- bzw. hydrierte Dieselölfraktionen oder Toluol.

Die Metallocene werden bevorzugt in Form ihrer Racemate eingesetzt. Das Metallocen wird bevorzugt in einer Konzentration, bezogen auf das Übergangsmetall, von $10^{-1}$ bis $10^{-8}$ mol, vorzugsweise $10^{-2}$ bis $10^{-7}$ mol, besonders bevorzugt von $10^{-3}$ bis $10^{-7}$ Mol Übergangsmetall pro $dm^3$ Reaktorvolumen angewendet. Das Aluminoxan wird in einer Konzentration von $10^{-4}$ bis $10^{-1}$, vorzugsweise $10^{-4}$ bis $2*10^{-2}$ Mol pro $dm^3$ Reaktorvolumen verwendet, bezogen auf den Gehalt an Aluminium. Prinzipiell sind aber auch höhere Konzentrationen möglich.

Die für die Zwecke der Erfindung geeigneten Cycloolefincopolymere weisen Glastemperaturen auf zwischen 0 und 250°C, bevorzugt zwischen 20 und 200°C, besonders bevorzugt zwischen 50 und 180°C.

Die für die Zwecke der Erfindung geeigneten COC weisen Viskositätszahlen (bestimmt in Dekalin bei 135°C) auf zwischen 25 und 200ml/g, bevorzugt zwischen 40 und 120ml/g, besonders bevorzugt zwischen 40 und 100 ml/g.

Die in der erfindungsgemäßen Polymer-Legierung enthaltenen Cycloolefincopolymere zeichnen sich durch eine besondere Struktur aus, die in der Dissertation von J. Ruchatz, Düsseldorf 1997 ausführlich beschrieben ist.

Demnach können die in der erfindungsgemäßen Polymer-Legierung enthaltenen Cycloolefincopolymere Sequenzen von zwei hintereinander inkorporierten Norborneneinheiten aufweisen. Gleichzeitig entsprechen zwei Norbomeneinheiten der maximal möglichen Sequenzlänge der in der erfindungsgemäßen Polymer-Legierung enthaltenen Cycloolefincopolymere.

Es wurde überraschend festgestellt, daß die Legierung der beschriebenen Cycloolefincopolymere mit üblichen Schlagzähmodifikatoren Materialien mit besonders hohen Schlagzähigkeiten ergibt.

Die in der erfindungsgemäßen Polymer-Legierung enthaltenen Cycloolefincopolymere zeichnen sich ferner aus durch eine Reißdehnung R
von $R \geq -0{,}0375 \cdot Tg + 12$, bevorzugt
von $R \geq -0{,}0375 \cdot Tg + 17$, besonders bevorzugt
von $R \geq -0{,}0375 \cdot Tg + 22$.

Außerdem zeichnen sich die in der erfindungsgemäßen Polymer-Legierung enthaltenen Cycloolefincopolymere aus durch einen Plateaumodul $G'_P$ von
$\log G'_P \geq -0{,}0035 \cdot Tg + 6$, bevorzugt
$\log G'_P \geq -0{,}0035 \cdot Tg + 6{,}03$ besonders bevorzugt
$\log G'_P \geq -0{,}0035 \cdot Tg + 6{,}06$.

Die in der erfindungsgemäßen Polymer-Legierung enthaltenen Kern-Schale-Partikel enthalten zwei (Kern und eine Schale) oder mehr (Kern und mehrere Schalen) sich einander abwechselnde Schichten verschiedener Polymere. Gemeinsames Merkmal dieser Partikel ist, daß die einzelnen Schichten aus Polymeren mit unterschiedlichen Glastemperaturen Tg besehen. Polymere mit niedriger Glastemperatur werden dabei als Kautschukphase und Polymere mit hoher Glastemperatur als Hartphase bezeichnet. Die Herstellung solcher Partikel kann z.B. durch Emulsionspolymerisation erfolgen. Eine oder mehrere Schichten können während der Herstellung chemisch vernetzt werden, damit sich Form und Größe des Kem-Schale-Partikels beim anschließenden legieren mit COC nicht verändern.

Als unvernetzte Grundmaterialien für die vemetzten Kautschukphasen kommen Polymersysteme in Frage, deren Glastemperaturen unterhalb von 0°C, bevorzugt unterhalb von -20°C und besonders bevorzugt unterhalb von -40°C liegen. Geeignet sind prinzipiell alle Polymere, die solche Glastemperaturen aufweisen und die zur Synthese von Kern-Schale-Partikeln geeignet sind.

Kern-Schale-Partikel, deren Kautschukphasen besonders niedrige Glastemperaturen Tg aufweisen sind besonders geeignet zur Herstellung von Polymer-Legierungen, die für Anwendungen bei tiefen Temperaturen eingesetzt werden.

Die Glastemperaturen der Kautschukphasen lassen sich häufig nicht für sich alleine messen, können aber dadurch ermittelt werden, daß man ein Emulsionspolymerisat der betreffenden Monomerenzusammensetzung herstellt,

isoliert, und die Glastemperatur bestimmt. Eine weitere Methode zur Bestimmung der Glastemperaturen der Kautschukphasen besteht in der Messung von dynamisch mechanischen Eigenschaften der erfindungsgemäßen Polymer-Legierungen und denen der Matrixpolymeren alleine. Maxima der Verlustfaktorkurven können als Maß für die Glastemperaturen angesehen werden.

Die für die Zwecke der Erfindung geeigneten Kern-Schale-Partikel enthalten Kautschukphasen in Volumen-%, bezogen auf das Gesamtvolumen der Partikel, zwischen 10 und 90, bevorzugt zwischen 20 und 70 und besonders bevorzugt zwischen 30 und 60.

Die für die Zwecke der Erfindung geeigneten Kern-Schale-Partikel enthalten Hartphasen in Volumen-%, bezogen auf das Gesamtvolumen der Partikel, zwischen 90 und 10, bevorzugt zwischen 80 und 30 und besonders bevorzugt zwischen 70 und 40.

Die Herstellung von Kern-Schale-Partikeln ist gut bekannt und zum Beispiel ausführlich beschrieben in US-A-3,833,682, US-A-3,787,522, DE-A-2 116 653, DE-A-22 53 689, DE-A-41 32 497, DE-A-41 31 738, DE-A-40 40 986, US-A-3,125,1904, DE-A-33 00 526.

Als Kautschukphase der Kern-Schale-Partikel können Homo- oder Copolymere, bestehend aus zwei oder mehr Monomerentypen verwendet werden. Gemeinsames Merkmal dieser Homo- und Copolymere ist eine Glastemperatur unterhalb von COC.

Dabei können sich die Homo- und Copolymere von folgenden Monomeren ableiten:

Konjugierte Dien-Monomere wie Butadien, Isopren, Chloropren, monoethylenische ungesättigte Monomere wie Alkyl- und Arylacrylate wobei die Alkylreste linear, cyclisch oder verzweigt sein können und die Arylreste wiederum selbst substituiert sein können. Alkyl- und Arylmethacrylate, wobei die Alkylreste linear, cyclisch oder verzweigt sein können und die Arylreste wiederum selbst substituiert sein können, substituierte Alkyl- und Arylmethacrylate und Acrylate, wobei die Substituenten lineare, cyclische oder verzweigte Alkylreste oder substituierte Arylreste sein können, Acrylnitril und substituierte Acryinitrile (z.B. Methacrylnitril, alpha-Methylenglutamitril, alpha-Ethylacrylnitril, alpha-Phenylacrylnitril), Alkyl- und Arylacrylamide und substituierte Alkyl- und Arylacrylamide, Vinylester und substituierte Vinylester, Vinylether und substituierte Vinylether, Vinylamide und substituierte Vinylamide, Vinylketone und substituierte Vinylketone, Vinylhalogenide und substituierte Vinylhalogenide, Olefine, mit einer oder mehr ungesättigten Doppelbindungen, wie sie z.B. zur Herstellung von olefinischen Kautschuken Verwendung finden, insbesondere Ethylen, Propylen, Butylen und 1,4-Hexadien sowie vinylaromatische Verbindungen wie Styrol, alpha-Methylstyrol, Vinyltoluol, Halogenstyrole und t-Butylstyrol.

Kautschukphasen auf der Basis von Organopolysiloxanen der nachfolgenden allgemeinen Formel können ebenso für den Aufbau von Kern-Schale-Partikeln verwendet werden,

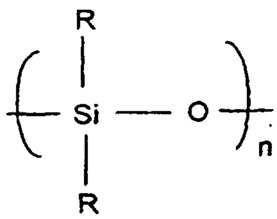

wobei R gleiche oder verschiedene Alkyl- oder Alkenylreste mit 1 bis 10 C-Atomen, Arylreste oder substituierte Kohlenwasserstoffreste bedeutet. Dabei können die Alkylreste und Alkenylreste linear, verzweigt oder cyclisch sein.

Weiterhin können Kautschukphasen auf der Basis von fluorierten monoethylenisch ungesättigten Verbindungen wie Tetrafluoroethylen, Vinylidenfluorid, Hexafluoropropen, Chlortrifluorethylen und Perfluoror(alkylvinylethern) verwendet werden.

Die Kautschukphasen können auch vernetzt sein, wozu sich polyfunktionelle ungesättigte Verbindungen wie sie zum Beispiel in DE-A-1 116 653, US-A-3,787,522 und EP-A-0 436 080 beschrieben sind verwenden lassen. Ebenso in diesen Schriften beschrieben ist die Verwendung von Aufpfropfmonomeren. Diese Verbindungen werden eingesetzt um eine mögliche weitere Schale chemisch an die darunter liegende Phase anzubinden falls dies erwünscht ist.

Zur Erzielung von Polymer-Legierungen mit guter Schlagzähigkeit auch bei tiefen Temperaturen werden Kern-Schale-Partikel bevorzugt, deren Kautschukphasen auf Butadien basieren.

Zur Erzielung von Polymer-Legierungen mit guter Witterungsstabilität werden Kern-Schale-Partikel bevorzugt, deren Kautschukphasen auf Acrylsäureestem basieren.

Kern-Schale-Partikel, deren Kautschukphasen auf Organosiloxanen beruhen werden bevorzugt, wenn die

Polymer-Legierung gute Schlagzähigkeit bei tiefen Temperaturen, gute Witterungsstabilität und gute Stabilität bei der Herstellung und Verarbeitung aus der Schmelze miteinander vereinen sollen.

Für die Hartphasen der erfindungsgemäßen Kern-Schale-Partikel können Homo- und Copolymere verwendet werden. Die Copolymere können dabei aus zwei oder mehr Monomeren aufgebaut sein. Gemeinsames Merkmal der entsprechenden Homo- und Copolymere ist eine Glasstufe oberhalb von 50 °C.

Dabei können sich die Homo- und Copolymere von folgenden Monomeren ableiten:

Monoethylenisch ungesättigte Verbindungen, wie Alkyl- und Arylacrylate, wobei die Alkylreste linear, cyclisch oder verzweigt sein können und die Arylreste wiederum selbst substituiert sein können, Alkyl- und Arylmethacrylate, wobei die Alkylreste linear, cyclisch oder verzweigt sein können und die Arylreste wiederum selbst substituiert sein können, substituierte Alkyl- und Arylmethacrylate und Acrylate, wobei die Substituenten lineare, cyclische oder verzweigte Alkylreste oder substituierte Arylreste sein können, Acrylnitrile und substituierte Acrylnitrile (z.B. Methacrylnitril, alpha-Methylenglutamitril, alpha-Ethylacrylnitril, alpha-Phenylacrylnitril etc.), Alkyl- und Arylacrylamide, Vinylester und substituierte Vinylester, Vinylether und substituierte Vinylether, Vinylamide und substituierte Vinylamide, Vinylketone und substituierte Vinylketone, Vinylhalogenide und substituierte Vinylhalogenide, Olefine (z.B. Ethylen, Propylen, Butylen), cyclische Olefine (z.B. Norbornen, Tetracyclododecen, 2-vinylnorbornen), fluorierte monoethylenisch ungesättigte Verbindungen wie Tetrafluoroethylen, Vinylidenfluorid, Hexafluoropropen, Chlortrifluorethylen und Perfluoro(alkylvinylether) sowie vinylaromatische Verbindungen der allgemeinen Formel:

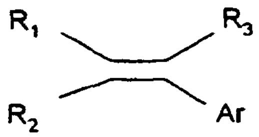

wobei $R_1$, $R_2$, $R_3$ Wasserstoff, lineare, verzweigte oder cyclische Alkylreste substituierte bzw. unsubstituierte Arylreste sind, die gleich oder verschieden sein können und Ar einen aromatischen $C_6$-$C_{18}$-Rest bedeutet, der zusätzlich noch Substituenten wie Alkyl-, oder Halogenreste tragen kann.

Die Hartphasen können vernetzt sein, wozu sich polyfunktionelle ungesättigte Verbindungen eignen, wie sie zum Beispiel in DE-A-2 116 653, US-A-3,787,522 und EP-A-0 436 080 beschrieben sind. Ebenso in diesen Schriften beschrieben ist die Verwendung von Aufpfropfmonomeren. Diese Verbindungen werden eingesetzt, um eine mögliche weitere Schale chemisch an die darunter liegende Schale anzubinden, falls dies erwünscht ist.

Als unvernetzte Grundmaterialien für die Hartphasen kommen alle Polymere in Frage mit Glastemperaturen oberhalb von 50°C, bevorzugt oberhalb von 80°C und besonders bevorzugt oberhalb von 100°C.

Die erfindungsgemäße Polymer-Legierung kann auch kommerziell erhältliche Kern-Schale-Partikel enthalten, beispielsweise Staphyloid-Typen der TAKEDA Chem. Industries, wie z.B. die in JP 17514 oder JP 129266 beschriebenen, Kane-Ace-Typen der KANEKA, die z.B. beschrieben sind in der Produktbroschüre Kane ACE-B, Metablen C, Metablen W und Metablen E - Typen der METABLEN Company BV, die beschrieben sind in der Produktbroschüre Metablen, Blendex - Typen der GE PLASTICS oder Paraloid-Typen der ROHM and HAAS, die z.B. beschrieben sind in Gächter/Müller Kunststoff-Additive, Carl Hanser München (1983) Seite XXIX ff oder der Broschüre PARALOID BTA 733, Impact Modifier for Clear Packaging (1987) von Rohm and Haas oder der Broschüre PARALOID BTA-III N2 BTA-702 BTA 715 (1989) von Rohm and Haas.

Im Falle der Verwendung von Kern-Schale-Partikeln als Schlagzähmodifikatoren enthalten die erfindungsgemäßen Polymer-Legierungen 2 bis 50 Gew.-%, bevorzugt 10 bis 40 Gew.-% und besonders bevorzugt 10 bis 25 Gew.-% Kern-Schale-Partikel, bezogen auf die Gesamtlegierung.

Alternativ zu Kern-Schale-Partikeln können Copolymere als Schlagzähmodifikatoren verwendet werden, die teilweise aus Kautschuken mit niedrigen Glastemperaturen aufgebaut sind.

Die in der erfindungsgemäßen Legierung enthaltenen Blockpolymere, enthalten einen oder mehrere Blocktypen mit einer Glastemperatur >40°C und einen oder mehrere Blocktypen mit einer Glastemperatur <-20 °C. Bevorzugt sind COC-Strukturpolymere, in denen sich Blöcke unterschiedlichen Cycloolefininhalts abwechseln (EP-A-0 560 090, auf die hier ausdrücklich Bezug genommen wird), und Blockpolymere, die durch anionische Polymerisation erhalten werden. Bevorzugt sind Di- und Triblockcopolymere.

Die Blocktypen mit einer Glastemperatur > 40 °C bestehen bevorzugt aus Polymeren, die durch anionische Polymerisation hergestellt werden, wie Polystyrol, Polyester oder Polyurethane. Die Blocktypen mit einer Glastemperatur < -20°C bestehen bevorzugt aus Homo- oder Copolymeren, welche Polybutadien, Polysiloxan, Polyisopren, hydriertes Polybutadien oder hydriertes Polyisopren enthalten.

Im Falle der Verwendung von Copolymeren, die teilweise aus Kautschuken mit niedrigen Glastemperaturen aufgebaut sind, als Schlagzähmodifikatoren enthalten die erfindungsgemäßen Polymer-Legierungen 2 bis 50 Gew.-%, bevorzugt 10 bis 40 Gew.-%, besonders bevorzugt 10 bis 25 Gew.-% Copolymere, bezogen auf die Gesamtlegierung.

Ebenfalls als Schlagzähmodifikatoren im Sinne der Erfindung können Kombinationen von einem oder mehreren der oben beschriebenen Kern-Schale-Partikeln und einem oder mehreren der oben beschriebenen Copolymeren, die teilweise aus Kautschuken mit niedrigen Glastemperaturen aufgebaut sind, verwendet werden.

Im Falle der Verwendung dieser Kombination von Schlagzähmodifikatoren enthalten die erfindungsgemäßen Polymer-Legierungen 2 bis 50 Gew.-%, bevorzugt 10 bis 40 Gew.-%, besonders bevorzugt 10 bis 25 Gew.-% der Kombination, bezogen auf die Gesamtlegierung, wobei die Bestandteile der Kombination in beliebigen Mischungsverhältnissen vorliegen können.

Für die Erzielung einer möglichst hohen Transparenz der Polymer-Legierungen sind Kern-Schale-Partikel und Copolymere, die teilweise aus Kautschuken mit niedrigen Glastemperaturen aufgebaut sind, mit mittleren Brechungsindizes (Volumenmittelwert) zwischen 1,52 und 1,55, bevorzugt zwischen 1,53 und 1,54 geeignet. Die jeweilige Auswahl optimaler Partikelbrechungsindizes und Radienverhältnisse der Partikel wird bestimmt gemäß Makromol. Chem. 183 (1990) 221 für Partikel aus einem Kern und einer Schale bzw. Gemäß M. Kerker, The Scattering of Light, Academic Press (1969) Kapitel 5.4 für Mehrschalenpartikel. Insbesondere Kern-Schale-Modifikatoren mit einer Mehrschichtstruktur, die aus einem Kern und mehreren Schalen bestehen, sind besonders geeignet, um transparente schlagzähe Polymer-Legierungen zu erhalten.

Die erfindungsgemäßen Polymer-Legierungen werden hergestellt bei Temperaturen oberhalb der Glastemperatur des Cycloolefincopolymers zwischen 60 und 350°C, bevorzugt zwischen 100 und 150°C und besonders bevorzugt zwischen 110 und 130°C.

Die erfindungsgemäßen Polymer-Legierungen können hergestellt werden durch übliche Verfahren (D.D. Walsh, Coprehensive Polymer Science, Pergamon Press (1989), Kapitel 5.2; J.L. White and K. Min, Comprehensive Polymer Science, Pergamon Press, (1989), Seite 285ff). Insbesondere können die Komponenten in Form von Pulvern oder Granulaten durch gemeinsame Extrusion aus der Schmelze zu Granulaten oder Chips verarbeitet werden, die anschließend in geformte Gebilde überführt werden können, z.B. durch Pressen, Extrudieren oder Spritzgießen. Insbesondere eignet sich die erfindungsgemäße Polymer-Legierung zur Herstellung spritzgegossener, spritzgeblasener, extrusionsgeblasener oder extrudierter Formkörper. Außerdem könne auch Folien und Fasern aus der erfindungsgemäßen Polymer-Legierung hergestellt werden.

Die erfindungsgemäßen Polymer-Legierungen können insbesondere hergestellt werden über sogenannte master batches. Hierbei werden Kern-Schale-Partikel und/oder Copolymere, die teilweise aus Kautschuken mit niedrigen Glastemperaturen aufgebaut sind, in Mengen von 20 bis 80 Gew.-%, bezogen auf die Gesamtmasse der Polymer-Legierung, mit einem oder mehreren Cycloolefincopolymeren gemischt (bevorzugt durch gemeinsame Extrusion) und anschließend auf die gewünschte Endkonzentration durch erneutes Mischen (bevorzugt durch gemeinsame Extrusion) mit einem oder mehreren Cycloolefincopolymeren gebracht. Diese Methode führt zu einer guten Dispergierung der Schlagzähmodifikatoren und wird bevorzugt verwendet, wenn Polymer-Legierungen mit Gehalten von 3 bis 25 Gew.-% Schlagzähmodifikatoren, bezogen auf die Gesamtmasse der Polymer-Legierung, herstellt werden.

Die erfindungsgemäße Polymer-Legierung weist Reißdehnung von 4 bis 200 %, bevorzugt 5 bis 100 %, besonders bevorzugt 10 bis 30 % und Kerbschlagzähigkeiten von 2.5 bis 100 $KJ/m^2$, bevorzugt von 4 bis 50 $KJ/m^2$, besonders bevorzugt von 10 bis 30 $KJ/m^2$ auf. Die erfindungsgemäße Polymer-Legierung, enthaltend mindestens ein amorphes Cycloolefincopolymer, zeichnet sich durch eine hohe Temperaturbeständigkeit und Chemikalienresistenz aus.

Die Polymer-Legierungen können Additive in üblichen Mengen enthalten wie Plastifiziermittel, UV-Stabilisatoren, optische Aufheller, Antioxidantien, Anstistatika, Wärmestabilisatoren oder verstärkende Zusätze wie Glasfasern, Kohlefasern oder Hochmodulfasern wie Polyaramide oder flüssigkristalline Polyester oder ähnliche. Außerdem können sie Füllstoffe wie anorganische Materialien, Talkum, Titandioxid oder ähnliches enthalten.

Die erfindungsgemäße Polymer-Legierung eignet sich für eine Vielzahl von Anwendungen wie Behälter, Flaschen, Getränkebecher, medizintechnische Anwendungen wie Blisterverpackungen oder Spritzgußteile für Anästhesie, Beatmung, Pädiatrie oder medizinische Versorgungseinrichtungen, Haushalsgüter wie Besteck, Mikrowellengeschirr, Gefrierdosen, Schüsseln, Wannen, insbesondere Badewannen, Wäscheklammern, Klobrillen, Wasserhähne, Möbel, Koffer, insbesondere Schalenkoffer, Blumentöpfe, Deckel und Verschlüsse für Flaschen, Spielwaren wie Bauklötze oder Tretautos, Lampengehäuse, Schlagbohrmaschinen, Bandschleifer, Schwingschleifer, Kreissäge, Anwendungen bei tiefen Temperaturen wie Kühlschrankeinsätze oder Gefrierschrankteile, Kabelummantelungen, Rohre, Sportausrüstungen wie Schutzhelme, Bootsrümpfe, Surfboards, Inneneinrichtungen von Automobilen wie Auskleidungen oder Armaturenbretter, Außeneinrichtungen von Automobilen wie Stoßfänger, Türbeplankung oder Radkappen, Halbzeug wie Dichtungen, Rohrverbinder oder Kabelbinder.

Die erfindungsgemäße Polymer-Legierung weist eine hohe Biegefestigkeit und eine hohe Spannungsrißbeständigkeit sowie eine gute Schmelzestabilität auf. Sie zeigt eine gute Bindenahtfestigkeit und eine hohe Fließfähigkeit, was insbesondere für Spritzgußanwendungen von Vorteil ist. die mechanischen Eigenschaften wie z.B. Wärmeformstabilität, Reißdehnung und Kerbschlagzähigkeit lassen sich in weiten Bereichen variieren, so daß vielfältige Anwendungsbereiche zugänglich sind.

Die in den folgenden Beispielen angegebenen Glastemperaturen Tg wurden mittels-DSC (Differential Scanning Calorimetry) bei einer Aufheizrate von 20 °C/min bestimmt. Die angegebenen Viskositätszahlen VZ wurden gemäß DIN 53728 in Dichlorbenzol bei 135 °C ermittelt. Die massenmittlere Molmasse und die Polydispersität wurden mittels GPC bestimmt.

Reißdehnungen und Streckspannungen wurden im Zugversuch nach ISO 527, Teil 1 und 2 mit einer Prüfgeschwindigkeit von 50 mm/min bestimmt.

Die schmelzerheologischen Eigenschaften zur Bestimmung des Plateaumoduls wurden in dynamischen Schwingungsexperiment mit einem schergeschwindigkeitskontrollierten Gerät der Firma Rheometrics mit einer Platte-Platte-Geometrie ermittelt bei Frequenzen von $10^{-1}$ bis $5*10^{2}s^{-1}$.

Als Maß für die Katalysatoraktivität wird die Ausbeute an Polymer pro Zeiteinheit und pro mmol Metallocen herangezogen:

$$\text{Aktivität} = \frac{\text{Polymer [g]}}{\text{Zeiteinheit [h] x Menge Metallocen [mmol]}} = A$$

Die Erfindung wird durch folgende Beispiele näher erläutert:

Beispiele:

Blendherstellung

Die Mischungen wurden auf dem Haake Meßextruder TW 100, einem konischen Doppelschneckenextruder, mit intensiv mischenden Schnecken und einer 1,7 mm Düse hergestellt. Für die Beispiele 3 bis 7 und die Vergleichsbeispiele 3 bis 7 betrugen die Verarbeitungstemperaturen 140/200/210/205°C und die Drehzahl 75 U/min. Für die Beispiele 8 bis 14 und die Vergleichsbeispiele 8 bis 14 betrugen die Verarbeitungstemperaturen 160/230/240/235°C und die Drehzahl 100 U/min. Die Prüfstäbe wurden auf einer Spritzgußmaschine Kraus-Maffei KM 90-210 hergestellt. Im Falle der Beispiele 3 bis 7 und der Vergleichsbeispiele 3 bis 7 war das Temperaturprofil 250/250/245/240°C, der Spritzdruck 37 bar, die Nachdruckzeit 10 s, die Formtemperatur 60°C, der Nachdruck 36 bar und die Kühlzeit 90 s. Im Falle der Beispiele 8 bis 14 und der Vergleichsbeispiele 8 bis 14 war das Temperaturprofil 270/270/265/265°C, der Spritzdruck 35 bar, die Nachdruckzeit 10 s, die Formtemperatur 110°C, der Nachdruck 36 bar und die Kühlzeit 90 s.

Herstellung der Cycloolefincopolymere

Beispiele 1,2

In einem 70 $dm^3$-Autoklav, der vorher mit Ethen gespült wurde, würde eine 40 Gew.-%ige Lösung von Norbornen in Toluol vorgelegt. Durch mehrfaches Aufdrücken von Ethen wurde die Lösung mit Ethen gesättigt. In den so vorbereiteten Reaktor wurde im Gegenstrom eine toluolische Lösung von Methylaluminiumoxanlösung (10 Gew.-%ige Methylaluminiumoxanlösung der Molmasse 1300 g/mol nach kryoskopischer Bestimmung) dosiert und 30 Minuten bei 70°C gerührt. Eine Lösung von insgesamt 9 mg des Metallocens Isopropylen (1-indenyl)(3-isopropylcyclopentadienyl) zirkondichlorid in toluolischer Lösung wurde nach 30minütiger Voraktivierung zugegeben.

Unter Rühren wurde eine Stunde polymerisiert, wobei der Ethylendruck von 20 bar durch Nachdosieren konstant gehalten wurde.

Nach Ende der Reaktionszeit wurde das Polymerisationsgemisch in ein Gefäß abgelassen und sofort in 300 $dm^3$ Aceton eingetragen, 30 Minuten gerührt und das ausgefallene Produkt anschließend filtriert. Der Filterkuchen wurde je dreimal abwechselnd mit 10 %iger Salzsäure und Aceton gewaschen, der Rückstand in Aceton aufgeschlämmt und erneut filtriert. Das so gereinigte Produkt wurde bei 40°C im Vakuum (0,2 bar) 24 Stunden getrocknet.

Es wurden 4,9 kg eines farblosen Polymers mit einer VZ von 67 ml/g, einer Glasumwandlungstemperatur von 82°C und einem Plateaumodul $G'_P$ von 600.000 erhalten. Dieses Produkt wird im folgenden als COC 1 bezeichnet.
COC 2 wurde mit dem gleichen Katalysator hergestellt. Abweichend von oben angegebener Anleitung wurden 39 mg Katalysator zugesetzt, der Gesamtdruck betrug 7 bar, der Ethylendruck 1,1 bar und der Gesamtverbrauch an Ethylen

2000 g. Es wurden 6,5 kg eines Polymeren mit der Glasübergangstemperatur 137°C, der Viskositätszahl von 53 ml/g und einem Plateaumodul $G'_P$ von 480 000 erhalten.

Vergleichsbeispiel 3,4

Vergleichsbeispiel 3 wurde aus einer 46 Gew.-%igen Norbornenlösung in Toluol mit 30 mg des Metallocens Isopropylen-bis-(1-indenyl)-zirkondichlorid hergestellt. Der Ethylendruck betrug 20 bar, der Wasserstoffdruck 2000 ppm. Das erhaltene Polymer besitzt eine Glasübergangstemperatur von 86°C, eine Viskositätszahl von 62 ml/g und einen Plateaumodul $G'_P$ von 420.000. Dieses Produkt wird als COC 3 bezeichnet.

Vergleichsbeispiel 4 wurde aus einer 60 Gew.-%ige Norbornenlösung in Dekalin mit 70 mg Isopropylen (cyclopentadieyl) (1-indenyl) zirkondichlorid hergestellt. Der Ethylendruck betrug 12 bar. Das erhaltene Polymer besitzt eine Glasübergangstemperatur von 140°C, eine Viskositätszahl von 63 ml/g und einem Plateaumodul $G'_P$ von 300.000. Dieses Produkt wird als COC 4 bezeichnet.

Beschreibung der verwendeten Modifikatoren

Kane Ace B582 ist ein Kern-Schale-Modifikator mit einem Kern-Schale-Verhältnis von 70/30, der von Kaneka bezogen wurde. Der Kern besteht aus einem unvernetzten Butadien-Styrol Copolymer, die Schale aus Methylmethacrylat/Styrol/Butylacrylat.

Paraloid EXL 2600 ist ein Kem-Schale-Modifikator auf MBS-Basis (Methyacrylat-Butadien-Styrol), der von Röhm & Haas erhältlich ist.

Kraton D 1184 CS ist ein kommerzielles Produkt der Deutschen Shell. Es ist ein verzweigtes Styrol-Butadien-Blockcopolymer mit einem Styrolanteil von 30 %, einer Shore A Härte von 75 und Reißdehnung von 820 %.

Septon 1050 ist ein Produkt von Kuraray Europe GmbH. Es ist ein Styrol-Ethylen-Propylen-Blockcopolymer mit einem Styrolanteil von 50 %, einer Shore A Härte von 97 und einer Reißdehnung größer 100 %.

Septon 2104 ist ebenfalls ein Produkt von Kuraray Europe GmbH. Es ist ein Styrol-Ethylen-Propylen-Styrol-Blockcopolymer mit einem Styrolgehalt von 65 %, einer Shore A Härte von 98 und einer Reißdehnung größer 100 %.

Zusammensetzung und Kerbschlagzähigkeiten der Blends

| Probe | COC | Modifikator: Menge (Gew.-%) bezogen auf Gesamtlegierung | Kerbschlagzähigkeit / kJ/m$^2$ |
|---|---|---|---|
| Beispiel 3 | COC 1 | | 2,2 |
| Vergleichsbeispiel 3 | COC 3 | | 2,1 |
| Beispiel 4 | COC 1 | 20 % Kane-Ace B 582 | 14,2 |
| Vergleichsbeispiel 4 | COC 3 | 20 % Kane-Ace B 582 | 10,7 |
| Beispiel 5 | COC 1 | 20 % Paraloid EXL 2600 | 10,4 |
| Vergleichsbeispiel 5 | COC 3 | 20 % Paraloid EXL 2600 | 5,4 |
| Beispiel 6 | COC 1 | 4 % Kraton D 1184 CS + 1,4 % Septon 1050 + 0,8 % Septon 2104 | 8,3 |
| Vergleichsbeispiel 6 | COC 3 | 4 % Kraton D 1184 CS + 1,4 % Septon 1050 + 0,8 % Septon 2104 | 4,6 |
| Beispiel 7 | COC 1 | 16 % Kane-Ace B 582 + 2,6 % Kraton D 1184 CS + 0,9 % Septon 1050 + 0,5 % Septon 2104 | 15,0 |
| Vergleichsbeispiel 7 | COC 3 | 16 % Kane-Ace B 582 + 2,6 % Kraton D 1184 CS + 0,9 % Septon 1050 + 0,5 % Septon 2104 | 11,0 |
| Beispiel 8 | COC 2 | | 1,7 |
| Vergleichsbeispiel 8 | COC 4 | | 1,7 |
| Beispiel 9 | COC 2 | 5 % Kane-Ace B 582 | 3,5 |
| Vergleichsbeispiel 9 | COC 4 | 5 % Kane-Ace B 582 | 2,0 |
| Beispiel 10 | COC 2 | 10 % Kane-Ace B 582 | 4,2 |
| Vergleichsbeispiel 10 | COC 4 | 10 % Kane-Ace B 582 | 2,7 |
| Beispiel 11 | COC 2 | 20 % Kane-Ace B 582 | 6,3 |
| Vergleichsbeispiel 11 | COC 4 | 20 % Kane-Ace B 582 | 4,2 |
| Beispiel 12 | COC 2 | 20 % Paraloid EXL 2600 | 6,8 |
| Vergleichsbeispiel 12 | COC 4 | 20 % Paraloid EXL 2600 | 4,4 |

Tabelle fortgesetzt

| Probe | COC | Modifikator: Menge (Gew.-%) bezogen auf Gesamtlegierung | Kerbschlagzähigkeit / kJ/m$^2$ |
|---|---|---|---|
| Beispiel 13 | COC 2 | + 4 % Kraton D 1184 CS + 1 % Septon 1050 + 1,2 % Septon 2104 | 5,4 |
| Vergleichsbeispiel 13 | COC 4 | + 4 % Kraton D 1184 CS + 1 % Septon 1050 + 1,2 % Septon 2104 | 3,6 |
| Beispiel 14 | COC 2 | 16 % Kane-Ace B 582 + 2,6 % Kraton D 1184 CS + 0,65 % Septon 1050 + 0,75 % Septon 2104 | 8,2 |
| Vergleichsbeispiel 14 | COC 4 | 16% Kane-Ace B 582 + 2,6 % Kraton D 1184 CS + 0,65 % Septon 1050 + 0,75 % Septon 2104 | 6,1 |

**Patentansprüche**

**1.** Polymer-Legierung, enthaltend eines oder mehrere Cycloolefincopolymere, die einen Plateaumodul G'p der folgenden Gielchung:

$$\log G'p \geq -0{,}0035 \cdot Tg + 6$$

besitzen,
und

a) einen oder mehrere Typen von Kern-Schale-Partikeln oder
b) eine oder mehrere Copolymere, die teilweise aus Kautschuken mit niedrigen Glastemperaturen aufgebaut sind, oder
c) eine Kombination von einem oder mehreren Typen von Kern-Schale-Partikeln und einem oder mehreren Copolymeren, die teilweise aus Kautschuken mit niedrigen Glastemperaturen aufgebaut sind,

**dadurch gekennzeichnet, dass** die Polymer-Legierung mindestens ein Cycloolefincopolymer enthält, das hergestellt wird durch Polymerisation von 0,1 bis 99,9 Gew.-%, bezogen auf die Gesamtmenge der Monomeren, mindestens eines polycyclischen Olefins der Formel I, II, II', III, IV oder V

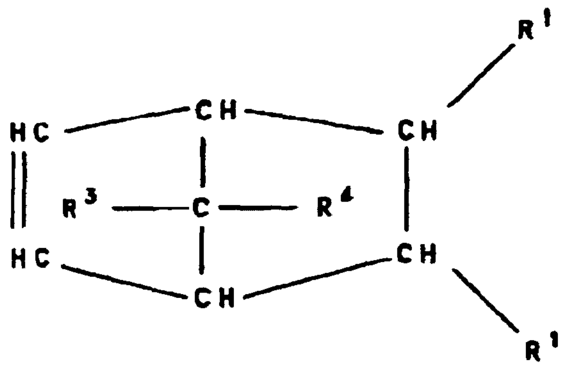

(I),

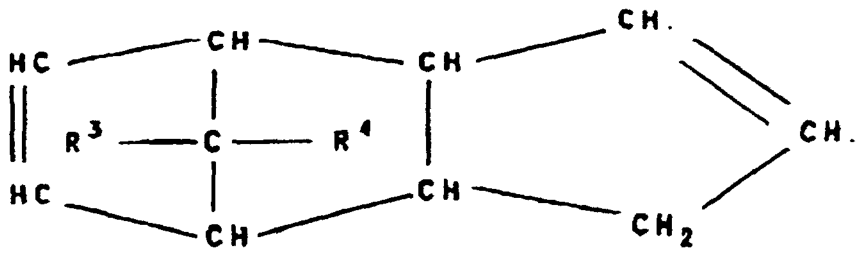

(II),

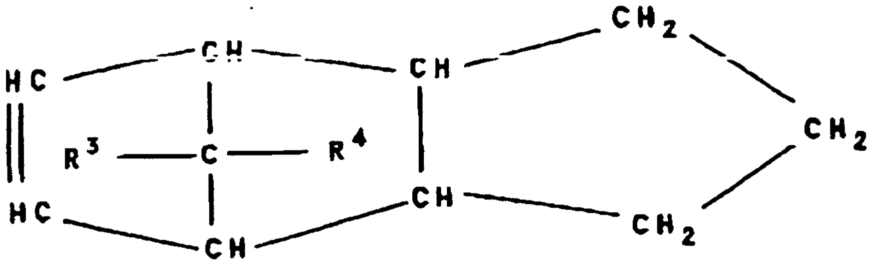

(II).

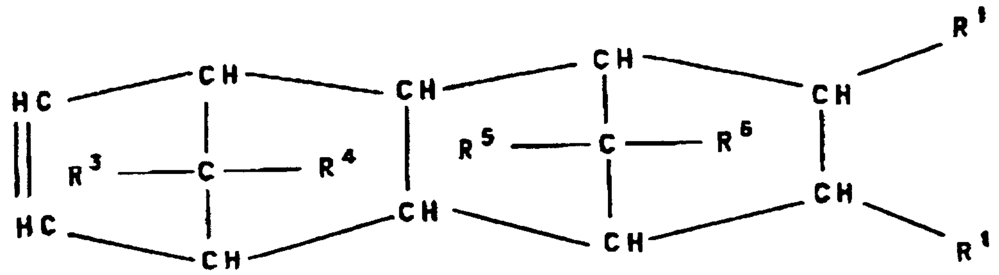

(III).

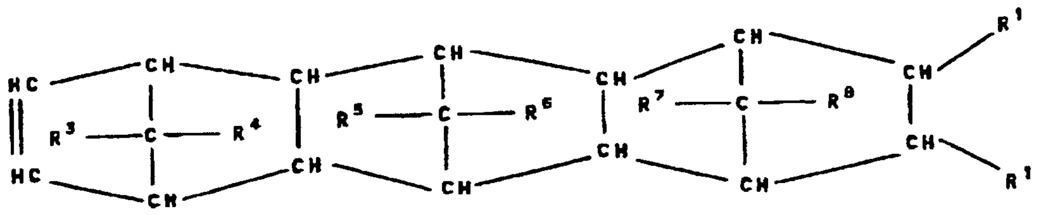

(IV).

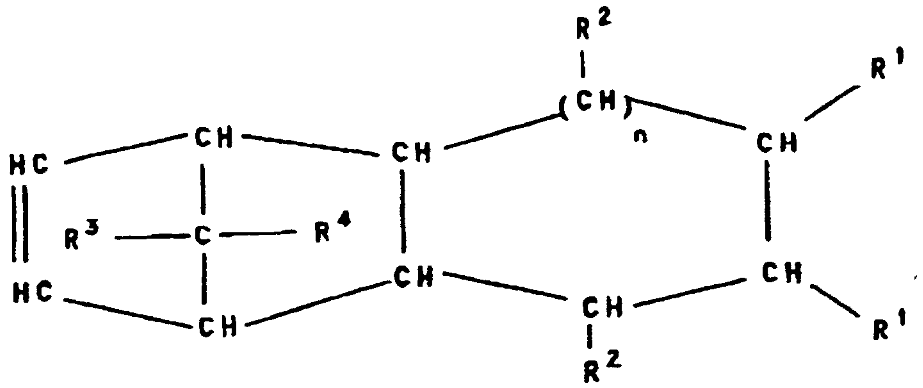

(V),

worin $R^1$, $R^2$, $R^3$, $R^4$, $R^5$, $R^8$, $R^7$ und $R^8$ gleich oder verschieden sind und ein Wasserstoffatom oder einen Kohlenwasserstoffrest bedeuten, wobei gleiche Reste in den verschiedenen Formeln eine unterschiedliche Bedeutung haben können
und 0,1 bis 99,9 Gew.-%, bezogen auf die Gesamtmenge der Monomeren, mindestens eines acyclischen 1-Olefins der Formel VII

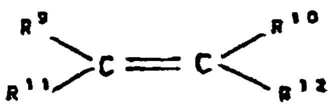

(VII),

worin R9, R10, R11 und R12 gleich oder verscheiden sind und ein Wasserstoffatom oder einen Kohlenwasserstoffrest, bevorzugt einen C6-C10-Arylrest oder einen C1-C8-Alkylrest bedeuten.

2. Polymer-Legierung nach Anspruch 1, wobei Cycloolefine der Formeln I oder III verwendet werden, worin R1, R2, R3, R4, R5, R6, R7 und R8 gleich oder verscheiden sind und ein Wasserstoffatom oder einen Kohlenwasserstoffrest, insbesondere einen ($C_6$-$C_{10}$)-Arylrest oder einen ($C_1$-$C_8$)-Alkylrest bedeuten, wobei gleiche Reste in den verschiedenen Formeln eine unterschiedliche Bedeutung haben können.

3. Polymer-Legierung nach Anspruch 1 oder 2, wobei ein acyclisches Olefin der Formel VII verwendet wird, worin R9, R10, R11 und R12 gleich oder verschieden sind und ein Wasserstoffatom oder einen Kohlenwasserstoffrest, bevorzugt einen $C_6$-$C_{10}$-Arylrest oder einen $C_1$-$C_8$-Alkylrest bedeuten, bevorzugt Ethylen, Propylen.

4. Polymer-Legierung nach einem oder mehreren der Ansprüche 1 bis-3, wobei das Copolymere mit polycyclischen Olefinen, vorzugsweise der Formeln I und III, und mit Ethylen hergestellt wird.

5. Polymer-Legierung nach einem oder mehreren der Ansprüche 1 bis 4, wobei polycyclische Olefine Norbornen und Tetracyclododecen sind, die durch $C_{1-}C_6$-Alkyl substituiert sind.

6. Polymer-Legierung nach einem oder mehreren der Ansprüche 1 bis 5, wobei das Copolymer ein Ethylen/Norbornen-Copolymer oder ein Ethylen/Tetracyclododecen-Copolymer ist.

7. Verfahren zur Herstellung der Polymer-Legierung nach einem oder mehreren der Ansprüche 1 bis 6 durch gemeinsame Extrusion der Komponenten in Form von Pulvern oder Granulaten aus der Schmelze.

8. Verwendung der Polymer-Legierung nach einem oder mehreren der Ansprüche 1 bis 6 als Schlagzähmodifikatoren.

**Claims**

1. A polymer blend comprising one or more cycloolefin copolymers which have a plateau modulus G'p given by the

following equation:

$$\text{Log } G'p \geq -0.0035 \cdot Tg + 6$$

and

a) one or more types of core-shell particles, or
b) one or more copolymers which are partially composed of rubbers with low glass transition temperatures, or
c) a combination of one or more types of core-shell particles and of one or more copolymers which are partially composed of rubbers with low glass transition temperatures,

which comprises at least one cycloolefin copolymer which is prepared by polymerizing from 0.1 to 99.9% by weight, based on the total amount of the monomers, of at least one polycyclic olefin of the formula I, II, II', III, IV or V

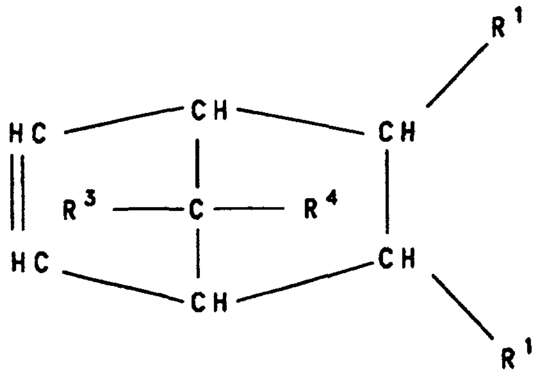

(I),

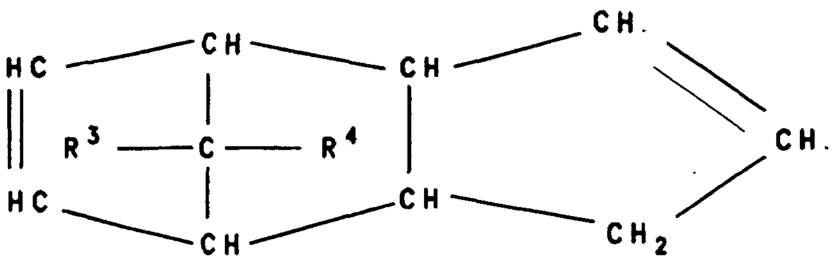

(II),

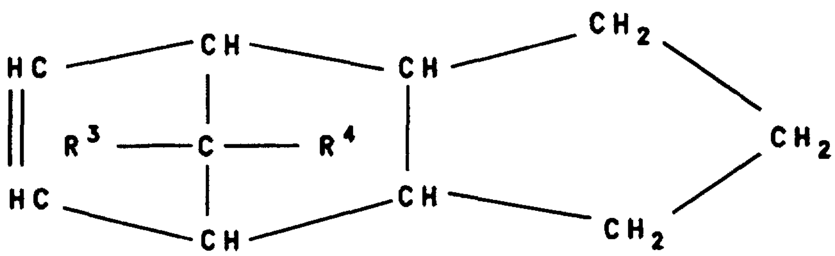

(II'),

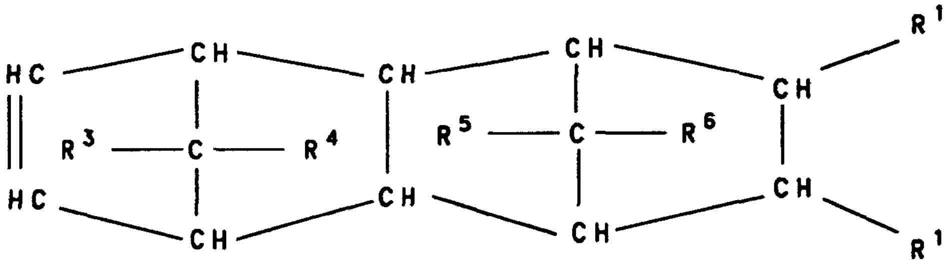

(III),

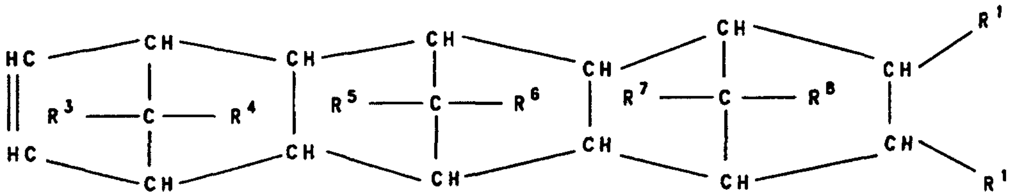

(IV),

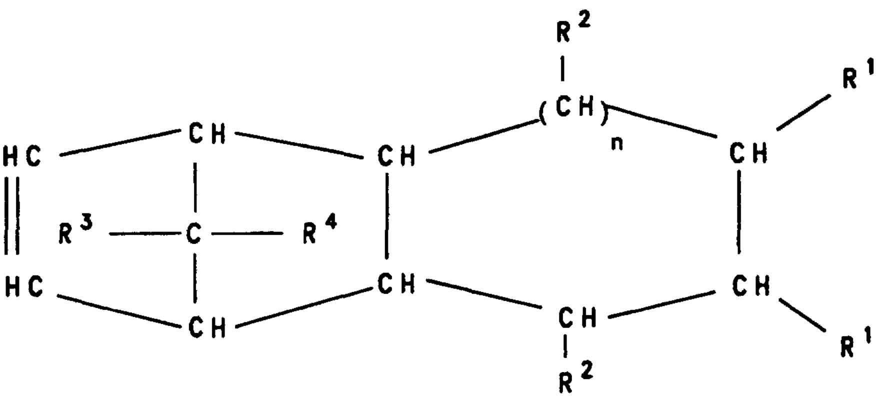

(V),

where $R^1$, $R^2$, $R^3$, $R^4$, $R^5$, $R^6$, $R^7$ and $R^8$ are identical or different and are a hydrogen atom or a hydrocarbon radical, where the same radicals in the different formulae may have a different meaning, and from 0.1 to 99.9% by weight, based on the total amount of the monomers, of at least one acyclic 1-olefin of the formula VII

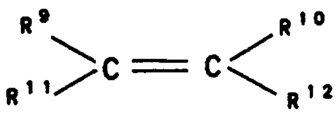

(VII),

where $R^9$, $R^{10}$, $R^{11}$ and $R^{12}$ are identical or different and are a hydrogen atom or a hydrocarbon radical, preferably a $C_6$-$C_{10}$-aryl radical or a $C_1$-$C_8$ alkyl radical.

2. A polymer blend as claimed in claim 1, where use is made of cycloolefins of the formulae I or III, where $R^1$, $R^2$, $R^3$, $R^4$, $R^5$, $R^6$, $R^7$ and $R^8$ are identical or different and are a hydrogen atom or a hydrocarbon radical, in particular a ($C_6$-$C_{10}$)-aryl radical or a ($C_{1-}C_8$)-alkyl radical, where the same radicals in the different formulae may have a different meaning.

3. A polymer blend as claimed in claim 1 or 2, where use is made of an acyclic olefin of the formula VII, where $R^9$, $R^{10}$, $R^{11}$ and $R^{12}$ are identical or different and are a hydrogen atom or a hydrocarbon radical, preferably a $C_6$-$C_{10}$-aryl radical or a $C_1$-$C_8$-alkyl radical, preferably ethylene or propylene.

4. A polymer blend as claimed in one or more of claims 1 to 3, where the copolymer is prepared with polycyclic olefins, preferably of the formulae I and III, and with ethylene.

5. A polymer blend as claimed in one or more of claims 1 to 4, where polycyclic olefins are norbornene and tetracyclododecene which have $C_1$-$C_6$-alkyl substitution.

6. A polymer blend as claimed in one or more of claims 1 to 5, where the copolymer is an ethylene-norbornene copolymer or an ethylene-tetracyclododecene copolymer.

7. A process for preparing the polymer blend as claimed in one or more of claims 1 to 6 by extruding the components together in the form of powders or pellets from the melt.

8. The use of the polymer blend as claimed in one or more of claims 1 to 6 as impact modifier.

## Revendications

1. Alliage de polymères contenant un ou plusieurs copolymères de cyclo-oléfines présentant un module de plateau G'p correspondant à l'équation suivante :

$$\log G'p \geq -0{,}0035 \cdot Tg + 6$$

et

a) un ou plusieurs types de particules constituées de noyau et d'enveloppe ou
b) un ou plusieurs copolymères qui sont en partie constitués de caoutchoucs à basses températures de transition vitreuse, ou
c) une association d'un ou plusieurs types de particules constituées de noyau et d'enveloppe et d'un ou plusieurs copolymères qui sont en partie constitués de caoutchoucs à basses températures de transition vitreuse,

**caractérisé en ce que** l'alliage de polymères contient au moins un copolymère de cyclo-oléfine qui est préparé par copolymérisation de 0,1 à 99,9 % en poids, par rapport à la quantité totale des monomères, d'au moins une oléfine polycyclique de formule I, II, II', III, IV ou V

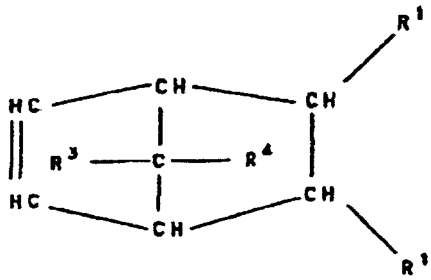

(I),

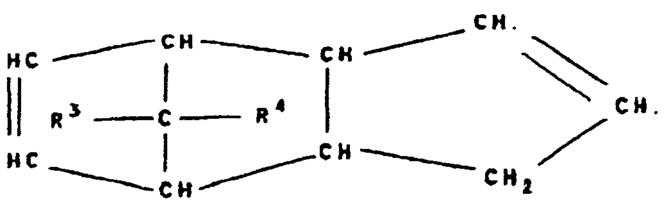

(II),

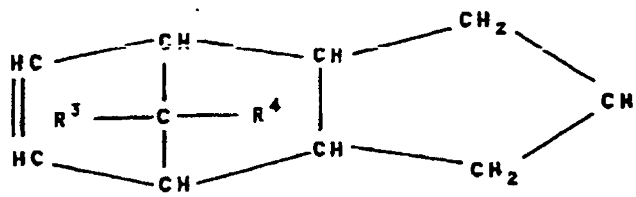

(II').

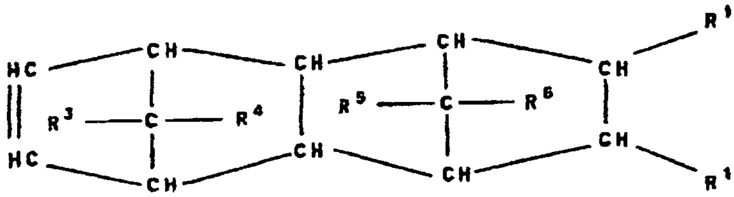

(III),

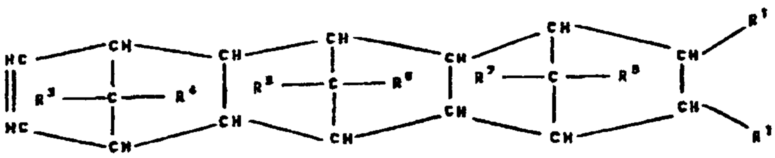

(IV).

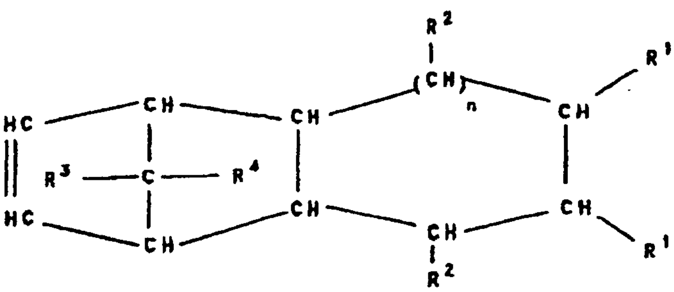

(V).

dans lesquelles $R^1$, $R^2$, $R^3$, $R^4$, $R^5$, $R^6$, $R^7$ et $R^8$ sont identiques ou différents et représentent un atome d'hydrogène ou un radical hydrocarboné, les mêmes radicaux dans les diverses formules pouvant avoir une signification différente, et 0,1 à 99,9 % en poids, par rapport à la quantité totale des monomères, d'au moins une 1-oléfine acyclique de formule VII

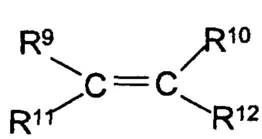

(VII),

dans laquelle $R^9$, $R^{10}$, $R^{11}$ et $R^{12}$ sont identiques ou différents et représentent un atome d'hydrogène ou un radical hydrocarboné, de préférence un radical aryle en $C_6$-$C_{10}$ ou un radical alkyle en $C_1$-$C_8$.

**2.** Alliage de polymères selon la revendication 1, dans lequel on utilise des cyclo-oléfines de formule I ou III dans lesquelles $R^1$, $R^2$, $R^3$, $R^4$, $R^5$, $R^6$ $R^7$ et $R^8$ sont identiques ou différents et représentent un atome d'hydrogène ou un radical hydrocarboné, en particulier un radical aryle en $C_6$-$C_{10}$ ou un radical alkyle en $C_1$-$C_8$, les mêmes radicaux

dans les diverses formules pouvant avoir une signification différente.

**3.** Alliage de polymères selon la revendication 1 ou 2, dans lequel on utilise une oléfine acyclique de formule VII dans laquelle $R^9$, $R^{10}$, $R^{11}$ et $R^{12}$ sont identiques ou différents et représentent un atome d'hydrogène ou un radical hydrocarboné, de préférence un radical aryle en $C_6$-$C_{10}$ ou un radical alkyle en $C_1$-$C_8$, de préférence éthylène, propylène.

**4.** Alliage de polymères selon une ou plusieurs des revendications 1 à 3, dans lequel le copolymère est préparé avec des oléfines polycycliques, de préférence de formules I et III, et avec de l'éthylène.

**5.** Alliage de polymères selon une ou plusieurs des revendications 1 à 4, dans lequel les oléfines polycycliques sont le norbornène et le tétracyclododécène, qui sont substitués par alkyle en $C_1$-$C_6$.

**6.** Alliage de polymères selon une ou plusieurs des revendications 1 à 5, dans lequel le copolymère est un copolymère éthylène/norbornène ou un copolymère éthylène/tétracyclododécène.

**7.** Procédé pour la préparation de l'alliage de polymères selon une ou plusieurs des revendications 1 à 6, par extrusion conjointe des composants sous forme de poudres ou de produits granulés, à partir de la masse fondue.

**8.** Utilisation de l'alliage de polymères selon une ou plusieurs des revendications 1 à 6, en tant qu'agents modificateurs antichoc.